Europäisches Patentamt

European Patent Office (11) Numéro de publication: **0 182 680**

Office européen des brevets A1

(19)

## DEMANDE DE BREVET EUROPEEN

(12)

(21) Numéro de dépôt: 85401967.6

(22) Date de dépôt: 09.10.85

(51) Int. Cl.⁴: **G 01 R 29/08**, G 01 K 7/00, G 05 D 23/27

(30) Priorité: **19.10.84 FR 8416087**

(43) Date de publication de la demande: **28.05.86 Bulletin 86/22**

(84) Etats contractants désignés: **BE CH DE GB IT LI NL**

(71) Demandeur: **Centre Technique Industriel dit: INSTITUT TEXTILE DE FRANCE, 35, rue des Abondances B.P. 79, F-92105 Boulogne Billancourt Cedex (FR)**
Demandeur: **CENTRE NATIONAL DE LA RECHERCHE SCIENTIFIQUE (CNRS), 13 Quai Anatole France, F-75700 Paris (FR)**

(72) Inventeur: **Rochas, Jean-François, 19 rue Philippe Delasalle, F-69004 Lyon Croix Rousse (FR)**
Inventeur: **Iapouile, Bertrand, 34 rue Badouilière, F-42000 Saint-Etienne (FR)**
Inventeur: **Leroy, Yves, 80 rue G. Baratte, F-59650 Villeneuve d'Ascq (FR)**
Inventeur: **Mamouni, Ahmed, 351/42 Rue Bauduin IX, F-59650 Villeneuve d'Ascq (FR)**
Inventeur: **van de Velde, Jean-Claude, Résidence Europe 07/233, F-59370 Mons en Baroeul (FR)**

(74) Mandataire: **Hasenrader, Hubert et al, Cabinet BEAU DE LOMENIE 55, rue d'Amsterdam, F-75008 Paris (FR)**

(54) **Procédé et dispositif de mesure par radiométrie micro-onde de la température d'un matériau plan en défilement, notamment textile.**

(57) La mesure de la température du matériau plan (8) en défilement est obtenue en faisant passer ledit matériau (8) au travers d'un guide d'onde (1) par deux ouvertures (3 et 4) pratiquées de telle sorte que, d'une part, elles ne coupent pratiquement pas les lignes de courant présentes sur les parois du guide (1) et, d'autre part, le matériau (8) dans le guide (1) ait une direction générale parallèle au champ électrique dans le mode de propagation dudit guide (1) et passe dans une zone de champ maximum, et en mesurant les bruits thermiques émis par la matériau (8) pendant son séjour dans le guide d'onde fendu (1).

Dans le cas d'un guide d'onde rectangulaire (1), fonctionnant selon le mode $TE_{01}$, les deux ouvertures (3 et 4) sont pratiquées suivant l'axe médian des deux grandes faces.

# PROCEDE ET DISPOSITIF DE MESURE PAR RADIOMETRIE MICRO-ONDE DE LA TEMPERATURE D'UN MATERIAU PLAN EN DEFILEMENT, NOTAMMENT TEXTILE

L'invention concerne la mesure de la température d'un matériau plan, basée sur l'émissivité (en ce qui concerne le bruit thermique) dudit matériau dans la gamme des micro-ondes ; elle concerne plus particulièrement la mesure de la température d'un matériau en défilement lors de sa fabrication ou d'opérations de transformation, par exemple un matériau textile tel qu'un tissu, un tricot, ou un papier ou un non-tissé.

La température est un paramètre le plus souvent primordial dans la fabrication ou dans les opérations de transformation, d'ennoblissement d'un matériau. Qui plus est, lorsque ces opérations sont réalisées en continu , il importe que la température soit maintenue constante pendant toute la durée, afin d'obtenir en final un matériau ayant des caractéristiques homogènes. Les techniques de mesure de la température d'un matériau en défilement sont multiples. Généralement, on mesure la température du milieu ambiant dans lequel circule le matériau, par exemple l'air dans la rame de séchage, en plaçant des thermomètres à différents emplacements de la rame : mais cette technique ne permet pas de connaître la température du matériau lui-même, qui selon sa structure et sa composition peut réagir différemment à une même température du milieu ambiant. On mesure également la température grâce à l'émissivité dudit matériau dans la gamme des infra-rouges ; dans ce cas il s'agit bien de la température du matériau lui-même puisqu'on mesure le rayonnement incohérent ou bruit thermique émis par le matériau afin d'en déduire sa température. L'émissivité est, pour des températures proches de la température ambiante, maximale dans la gamme des infra-rouges, ce qui explique le développement de ce type de détecteurs. Mais le principe même de la mesure présente des inconvénients qui en limitent grandement les applications industrielles : le rayonnement capté dans la gamme des infra-rouges émis en profondeur du matériau est atténué au fur et à mesure par le matériau lui-même. D'autre part le rayonnement dans cette gamme de longueurs d'onde est, pour un même matériau et une même température, variable selon la couleur du matériau, ce qui pose bien sûr des problèmes de fiabilité dans l'industrie textile.

On connaît, par ailleurs, dans le domaine médical, la thermographie par micro-ondes, qui est également basée sur les bruits thermiques émis par un corps, mais cette fois dans la gamme des micro-ondes. Le choix de ces longueurs d'onde permet de mesurer la température d'un volume du corps et non plus uniquement la surface, puisque les micro-ondes jusqu'à une certaine profondeur ne sont pas arrêtées par le corps lui-même. Dans ce cas, la difficulté réside dans la sensibilité des détecteurs, puisque l'émissivité d'un même corps dans la gamme des micro-ondes est beaucoup plus faible, de l'ordre de $10^8$ fois moindre que celle dans la gamme des infra-rouges. D'autre part, le détecteur doit mesurer les bruits thermiques émis par le matériau dont on veut mesurer la température, et non ceux provenant du milieu ambiant dans lequel se trouve ledit matériau. Dans le domaine médical, la détection est réalisée en mettant en oeuvre une sonde plane que l'on applique au contact de la surface extérieure du volume d'investigation : les tissus vivants émettent des bruits thermiques qui sont captés par la sonde et sélectionnés dans une bande de fréquences située dans la gamme des micro-ondes, puis transmis à un récepteur amplificateur large bande calé sur une fréquence de cette bande. Etant appliquée directement sur la peau, la sonde ne reçoit que les bruits thermiques émis par le volume d'investigation et non ceux émis par le milieu extérieur. Cette technique est difficilement utilisable pour la fabrication ou des opérations de transformation de matériau plan en défilement. En effet le contact direct de la sonde sur le matériau risque d'occasionner des défauts rédhibitoires. De plus, l'émissivité des matériaux plans du type textiles étant relativement faible en comparaison à celle des tissus vivants, on constate que la puissance captée est très faible. Enfin les matériaux type textiles présentant des pertes diélectriques faibles (notamment polyester, polyamide) et leur épaisseur étant nettement inférieure à une longueur d'onde, les bruits thermiques émis par le milieu ambiant sont transmis au récepteur amplificateur par l'intermédiaire de la sonde en contact avec le matériau, qui ne joue plus le rôle d'écran. Et les signaux émis par le milieu ambiant sont souvent plus intenses que ceux émis par le matériau lui-même.

Or on a trouvé, et c'est ce qui fait l'objet de l'invention, un procédé pour mesurer la température d'un matériau plan en défilement basé sur l'émissivité dudit matériau dans la gamme des micro-ondes, qui ne présente pas tous les inconvénients précités. Ce procédé consiste à faire passer le matériau au travers d'un guide d'onde, par deux ouvertures pratiquées de telle sorte que d'une part elles ne coupent pratiquement pas les lignes de courant présentes sur les parois et d'autre part le matériau dans le guide ait une direction générale parallèle au champ électrique dans le mode de propagation dudit guide et passe dans une zone de champ maximum, et à mesurer les bruits thermiques émis par le matériau pendant son séjour dans le guide d'onde fendu. Ainsi le matériau passe au travers des fentes pratiquées dans le guide d'onde sans contact mécanique avec celui-ci;la direction de passage et le choix de l'emplacement permettent d'obtenir d'une part un couplage très satisfaisant entre le matériau et le guide d'onde et d'autre part de minimiser le rayonnement parasite du milieu ambiant à un niveau acceptable ne masquant pas le rayonnement émis par le matériau à l'intérieur du guide d'onde. En effet, puisque le matériau, selon le procédé de l' invention, passe dans une zone de champ maximum et parallèlement à ce dernier, le rendement de transformation de l'énergie émise en énergie captée sera voisin de cent pour cent : tous les bruits thermiques émis par le matériau pourront être transmis au récepteur amplificateur. De plus, étant donné que les ouvertures pratiquées dans le guide d'onde sont situées de telle sorte qu'elles ne coupent pratiquement pas les lignes de courant présentes dans les parois, il y a peu de fuites dans un sens comme dans l'autre : peu de fuites relativement aux bruits thermiques émis par le matériau dans le guide d'onde, et peu de fuites relativement aux bruits thermiques émis par le milieu ambiant à l'extérieur du guide d'onde.

Le procédé selon l'invention convient particulièrement bien lorsque le matériau subit un traitement thermique continu et que l'on veut réguler les moyens de traitement en fonction de la température prise par le matériau lui-même.Dans ce cas on régule les moyens de traitement en fonction de la mesure d'émissivité obtenue.Selon un mode avantageux de régulation,on mesure la différence d'émissivité entre d'une part le matériau en défilement pendant son séjour dans le guide d'onde fendu et d'autre part un échantillon du même matériau porté à la température souhaitée, et on effectue la régulation des moyens de traitement en fonction de la différence constatée. Ce mode de régulation est particulièrement intéressant puisqu'il permet de s'affranchir des caractéristiques diélectriques du matériau. En effet, chaque matériau a un facteur de perte, fonction de la température, qui lui est propre. Il convient donc normalement de connaître cette relation pertes-température qui permet de traduire l'émissivité en température pour un matériau donné, et pour cela d'établir les courbes d'étalonnage correspondantes. Le procédé par émissivité différentielle selon l'invention n'a pas besoin de courbes d'étalonnage puisque la régulation des moyens de traitement vise uniquement à ce que la différence des émissivités constatée, entre le matériau en cours de traitement et l'échantillon de matériau qui est à la température souhaitée, soit nulle : tout écart positif ou négatif entraînera une action soit sur les moyens de chauffage soit sur la vitesse de défilement du matériau pour annuler cet écart.

Avantageusement la direction générale du matériau lors de son défilement n'est pas perpendiculaire à la direction de propagation de l' onde dans le guide d'onde.

C'est un autre objet de l'invention que de proposer un dispositif spécialement conçu pour mettre en oeuvre le procédé précité. Ce dispositif est constitué :

. d'un guide d'onde fendu selon deux ouvertures destinées à laisser passer le matériau lors de son défilement , les deux ouvertures étant pratiquées de telle sorte qu'elles ne coupent pratiquement pas les lignes de courant présentes sur les parois et que le plan passant par celles-ci soit dans une zone de champ maximum, parallèle au champ électrique dans le mode de propagation du guide,

. et d'un récepteur amplificateur relié au guide d'onde et capable de mesurer les bruits thermiques émis par le matériau pendant son séjour dans le guide d'onde .

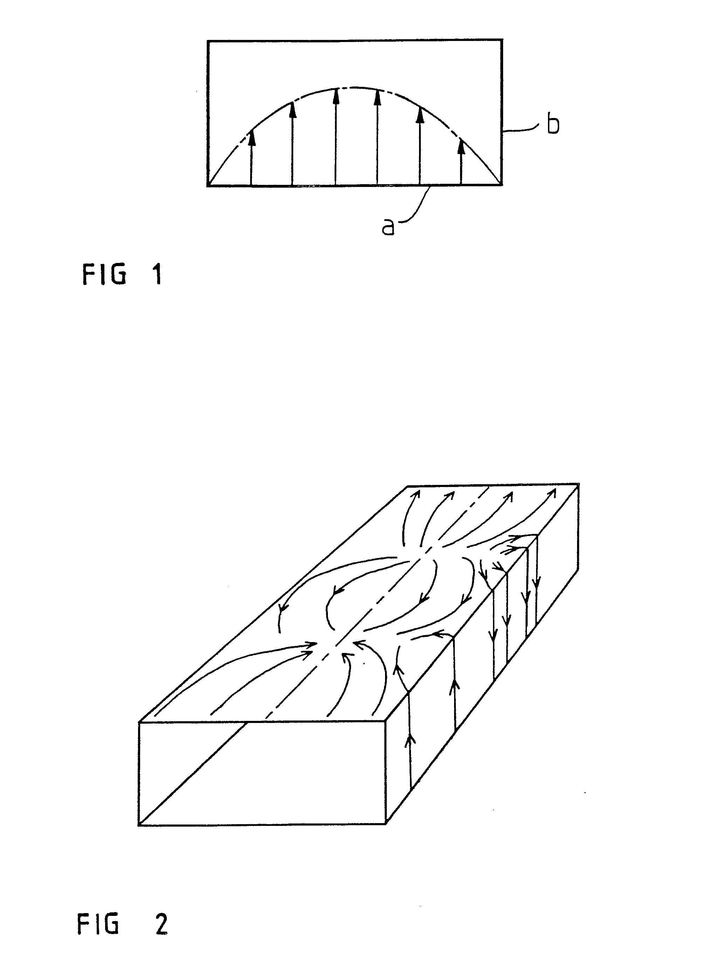

Dans le cas d'un guide d'onde rectangulaire, fonctionnant selon le mode $TE_{01}$ , les deux ouvertures sont pratiquées suivant l'axe médian des deux grandes faces. Dans ce type de guide d'onde, bien connu des spécialistes en micro-ondes, le champ électrique a une direction générale qui est perpendiculaire aux deux grandes faces et une composante qui est maximale dans le plan médian du guide (figure 1) ; par ailleurs si on regarde la configuration des lignes de courant sur les parois du guide (figure 2), on constate qu'aucune de ces lignes n'est coupée par le plan passant par le milieu des deux grandes faces du guide. Il n'y aura donc théoriquement pas de perturbations quant à la propagation de l'onde ni d'interférence avec les bruits thermiques émis par l'extérieur du fait de ces deux ouvertures dont la longueur n'est pas limitée. En fait, le matériau plan dont on souhaite mesurer la température ayant une certaine épaisseur, il est nécessaire de prévoir des ouvertures permettant le passage de ce matériau sans contact et donc d'une largeur suffisante. Pour minimiser les fuites, il faut toutefois que la largeur de chaque ouverture soit au plus égale au tiers de la longueur du grand côté de la section droite du guide d'onde.

Dans le cas d'un guide d'onde circulaire, fonctionnant selon le mode $TM_{01}$, les deux ouvertures sont pratiquées selon les deux génératrices diamétralement opposées en regard des zones de champ maximum.

Il revient à l'homme du métier de positionner les ouvertures pour le passage du matériau plan de façon à ce que les critères précédemment définis soient respectés.

L'invention sera mieux comprise grâce à la description qui va suivre d'un mode de réalisation et un dessin dans lequel :

. la figure 1 montre la configuration du champ électrique dans un guide d'onde rectangulaire.

. la figure 2 montre la configuration des lignes de courant sur les parois d'un guide d'onde rectangulaire.

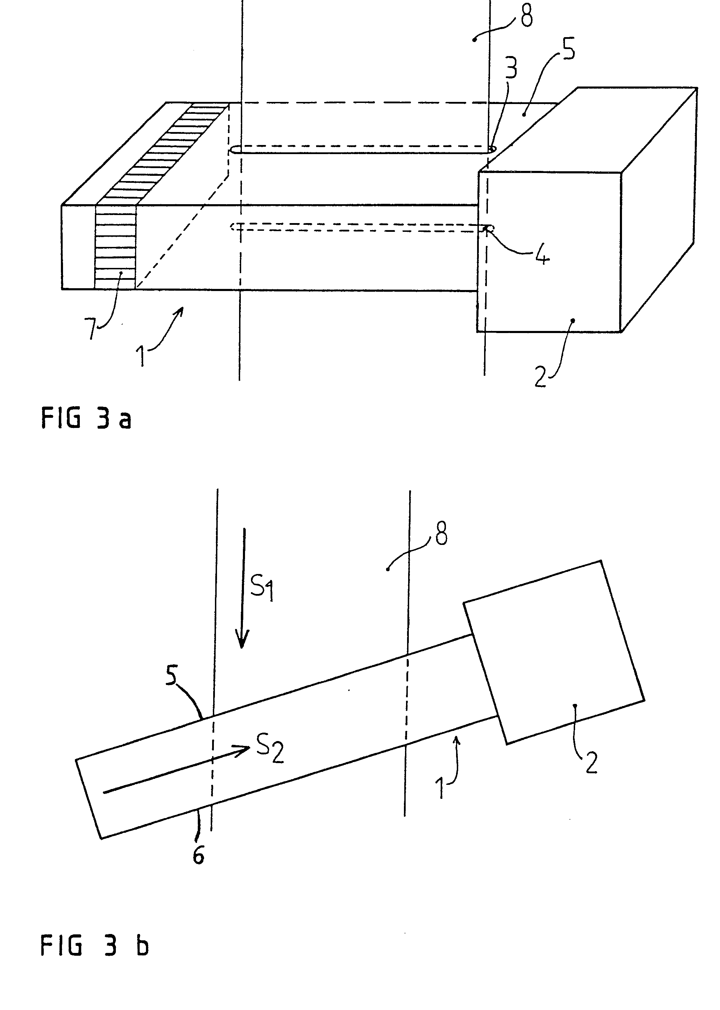

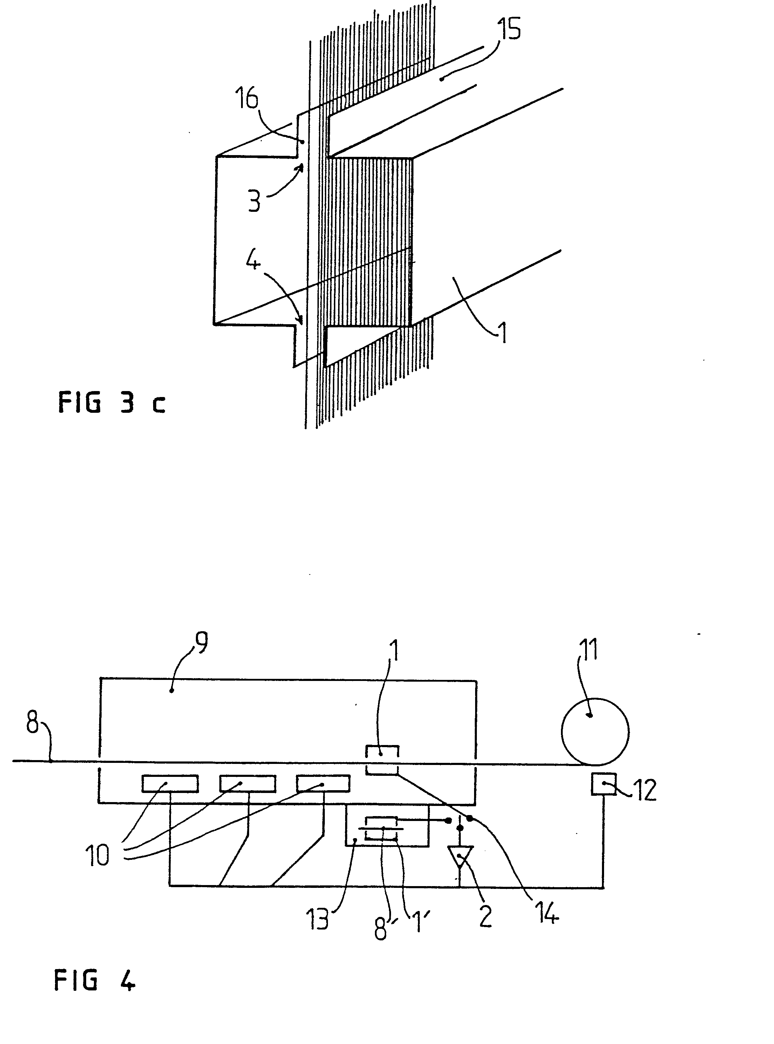

. les figures 3a, 3b et 3c sont des vues du dispositif selon l'invention.

. la figure 4 est une vue schématique d'une installation de traitement thermique du tissu mettant en oeuvre le dispositif de régulation par émissivité différentielle selon l'invention.

Le dispositif selon l'invention comprend le guide d'onde 1 et le récepteur amplificateur 2. La section droite du guide d'onde 1 a une forme rectangulaire avec un grand côté de longueur a et un petit côté de longueur b. Il fonctionne suivant le mode fondamental $TE_{01}$, et la longueur d'onde $\lambda$ correspondant à la fréquence centrale de réception du récepteur amplificateur 2 est telle que $a < \lambda < 2a$. Pour une fréquence comprise entre 2 et 4 GHz, les dimensions des côtés du rectangle, section droite du guide 1 seront par exemple a = 8 centimètres, b = 4 centimètres ; pour une fréquence de 10 GHz, a = 3 centimètres, b = 1,5 centimètre. Le guide 1 est fendu suivant deux ouvertures 3 et 4, placées suivant l'axe médian des deux grandes faces du guide, respectivement 5 et 6. La largeur des deux ouvertures 3 et 4 permettant le passage du tissu 8 est de 2 centimètres lorsque a = 8 centimètres, et de 0,75 centimètre lorsque a = 3 centimètres. Le guide 1 est fermé d'un côté par un court-circuit 7 mobile, dont on peut ajuster la position à l'intérieur du guide1pour adapter l'impédance en fonction du matériau présent dans le guide 1. De l'autre côté, le guide 1 est relié au récepteur amplificateur 2. Le tissu 8 traverse le guide 1 en pénétrant par l'ouverture 3 et en sortant par l'ouverture 4. On peut prévoir une alimentation non représentée d'air comprimé destinée à créer à l'intérieur du guide 1 une légère surpression par rapport au milieu extérieur; ceci est utile notamment dans le cas où le milieu extérieur serait polluant (poussière, vapeur...) et évite un encrassement de l'intérieur du guide 1 qui aurait pour effet de perturber la mesure de l'émissivité. Lorsque la largeur des ouvertures 3 et 4 est importante, il peut être intéressant, afin d'éviter les risques de perturbations, de prolonger chaque ouverture par deux lèvres 15 et 16, parallèles entre elles et à la direction générale que prend le tissu 8 lorsqu'il traverse le guide 1 (figure 3c).

Le fonctionnement du dispositif est le suivant. Le récepteur amplificateur 2 est calé sur une fréquence centrale, correspondant à la gamme des micro-ondes, comprise entre 0,5 et 10 GHz, par exemple 2,45 GHz. Le guide d'onde 1 capte les signaux de bruits thermiques émis dans son volume intérieur, dans la bande de fréquence autour de la fréquence centrale du récepteur 2. En fait, les bruits thermiques émis à l'intérieur du guide 1 proviennent essentiellement du tissu 8 dont on veut mesurer la température, étant donné que l'air contenu dans le guide n' émet pratiquement aucun bruit thermique en comparaison de ceux émis par le tissu, et que la position adoptée pour les deux ouvertures 3 et 4 évite les perturbations venant de l'extérieur. On déplace le court-circuit 7 à l'intérieur du guide 1 de manière à adapter la longueur des ouvertures 3 et 4 à la dimension du tissu 8 qui traverse le guide 1. On a préalablement étalonné le récepteur 2 en fonction du tissu 8 dont on veut mesurer la température, sachant qu'en fonction de sa composition son facteur de perte variera différemment avec la température.

Dans le cas où le tissu 8 est stationnaire dans le guide 1, les signaux de bruits thermiques émis par le tissu 1, qui sont transmis par le guide 1 jusqu'au récepteur 2 et transcrits en température, correspondent à la température moyenne du volume de tissu 8 séjournant à l'intérieur du guide 1 entre les deux ouvertures 3 et 4.

Lorsque le tissu 8 se déplace, les bruits thermiques émis par le tissu 8 sont intégrés par le récepteur 2 selon des intervalles de temps limités, ce qui permet de connaître la température quasiment instantanée et moyenne pour tout le tissu 8 traversant le guide 1, et donc de constater les écarts entre ladite température et la température souhaitée. Une meilleure adaptation de l'impédance est obtenue lorsqu'on incline le guide d'onde 1 sur le parcours du tissu 8 , comme cela est illustré à la figure 3b, c'est-à-dire lorsque la direction générale du tissu 8 (flèche $S_1$) n'est pas perpendiculaire à la direction de propagation de l'onde dans le guide d'onde 1 (flèche $S_2$).

L'installation de régulation par mesure de l'émissivité différentielle comprend deux guides d'onde 1 et 1' du même type que ceux décrits précédemment. Le premier guide 1 est traversé par le tissu 8 en cours de traitement thermique qu'il subit dans l'enceinte 9 ; ladite enceinte est équipée de moyens de chauffage 10. Après son passage dans l'enceinte 9 le tissu 8 est réceptionné sous la forme d'une bobine 11, qui est tractée grâce au moteur à vitesse variable 12. Le second guide 1' est identique au guide 1 ; il est placé dans une enceinte isolée 13 équipée de moyens de chauffage non représentés permettant de faire varier la température dans l'enceinte 13 et de maintenir la même température avec précision. L'enceinte 13 est munie de moyens d'alimentation, grâce auxquels l'opérateur peut placer dans le guide d'onde 1' un échantillon 8' du tissu 8, de même largeur que celui-ci. Les deux guides 1 et 1' sont tous deux reliés au même récepteur amplificateur 2, mais par l'intermédiaire de la bascule 14 le récepteur 2 ne peut recevoir les signaux de bruits thermiques que d'un seul guide à la fois. Le récepteur 2 est relié soit aux moyens de chauffage 10 soit au moteur 12.

Le fonctionnement de l'installation est le suivant. L'opérateur introduit dans le guide 1' un échantillon 8' du tissu 8 à traiter ; il règle les moyens de chauffage de l'enceinte 13 pour que la température à l'intérieur de cette enceinte atteigne la température T de traitement pour le tissu 8. Lorsque cette température T est stabilisée à l'intérieur de l'enceinte 13, l'installation de traitement peut être mise en route. Le tissu 8 traverse le guide 1, placé dans l'enceinte 9. Grâce aux moyens de chauffage 10, par exemple générateurs d'air chaud, l'intérieur de l'enceinte est porté à une température $T_1$ supérieure à T, de manière à ce que le tissu 8 qui est à la température extérieure ambiante lorsqu'il pénètre dans l'enceinte 9 atteigne progressivement la température T de traitement puis s'y maintienne. On peut pour assurer cette montée et ce maintien en température jouer sur différents corps de chauffe 10 placés le long de l'enceinte 9. Les guides d'onde 1 et 1' captent les signaux de bruits thermiques émis respectivement par le tissu 8 qui défile dans le guide 1 et par l'échantillon 8' qui séjourne dans le guide 1'. A intervalles de temps réguliers, le récepteur 2 est relié au guide 1 puis au guide 1', et mesure successivement l'émissivité de l'un et de l'autre. Un élément de correction, en fonction de la vitesse de défilement du tissu 8, permet de comparer les mesures obtenues et de faire apparaître les écarts d'émissivité. Dans le cas où l'émissivité du tissu 8 est plus importante que celle de l'échantillon 8', la température du tissu 8 est supérieure à la température T de traitement, et le récepteur amplificateur 2 agit soit sur les moyens de chauffage 10 de manière à diminuer la température $T_1$ dans l'enceinte 9, soit sur le moteur 12 de manière à accélérer la vitesse de défilement du tissu 8. Dans le cas où l'écart est en sens inverse, le récepteur 2 agira sur les moyens 10 ou le moteur 12 de manière à augmenter la température $T_1$ dans l'enceinte 9 ou à diminuer la vitesse de défilement du tissu 8. D'un point de vue pratique, on règle le récepteur 2 pour qu'il n'agisse sur les moyens 10 ou le moteur 12 que lorsque l'écart constaté, positif ou négatif, atteint une valeur donnée correspondant à la fourchette de température acceptable pour le traitement, par exemple pour un traitement de thermofixation thermique des colorants après impression d'un tissu 8 de polyamide , la température T serait de 125°C $\pm$ 2°C : le régulateur 2 n'interviendra sur les moyens 10 ou le moteur 12 que si l'écart constaté dépasse, en signaux de bruits thermiques, l'équivalent de 2°C.

L'exemple qui vient d'être décrit met en oeuvre comme matériau plan en défilement un tissu ; il peut s'agir de n'importe quel type de matériau textile, tricot, grille, ou non textile, par exemple non-tissé, papier.

REVENDICATIONS

1. Procédé pour mesurer la température d'un matériau plan (8) en défilement, basé sur l'émissivité (en ce qui concerne le bruit thermique) dudit matériau, caractérisé en ce que l'on fait passer ledit matériau (8) au travers d'un guide (1) de propagation des micro-ondes, par deux ouvertures (3, 4) pratiquées de telle sorte que d'une part elles (3, 4) ne coupent pratiquement pas les lignes de courant présentes sur les parois et d'autre part le matériau (8) dans le guide (1) ait une direction générale parallèle au champ électrique dans le mode de propagation dudit guide (1) et passe dans une zone de champ maximum, et en ce que l'on mesure l'émissivité du matériau (8) pendant son séjour dans le guide d'onde (1).

2. Procédé selon la revendication 1 caractérisé en ce que, le matériau étant chauffé grâce à des moyens de chauffage (10) et tractés grâce à des moyens moteurs (12) appropriés, on régule les uns ou les autres desdits moyens en fonction de l'émissivité mesurée.

3. Procédé selon la revendication 2 caractérisé en ce qu'on mesure la différence d'émissivité entre d'une part le matériau en défilement (8) et d'autre part un échantillon (8') du même matériau porté à la température souhaitée, et en ce qu'on effectue la régulation en fonction de la différence constatée.

4. Procédé selon l'une des revendications 1 à 3 caractérisé en ce que, lors de son déplacement, le matériau (8) a une direction qui n'est pas perpendiculaire à la direction de propagation de l'onde dans le guide (1).

5. Dispositif pour mesurer la température d'un matériau (8) plan en défilement caractérisé en ce qu'il comprend :
. un guide de propagation des micro-ondes, fendu selon deux ouvertures (3, 4) destinées à laisser passer le matériau (8), les deux ouvertures (3, 4) étant pratiquées de telle sorte qu'elles ne coupent pratiquement pas les lignes de courant présentes sur les parois du guide (1) et que le plan passant par celles-ci (3, 4) soit dans une zone de champ maximum, parallèle au champ électrique dans le mode de propagation du guide,
. et un récepteur amplificateur (2), relié au guide (1) et capable de mesurer l'émissivité du matériau (8) séjournant dans le guide (1).

6. Dispositif selon la revendication 5 caractérisé en ce que le guide (1) d'onde est rectangulaire et en ce que les ouvertures (3, 4) sont pratiquées sensiblement le long du plan passant par le milieu des grandes faces du guide (1).

7. Dispositif selon la revendication 6 caractérisé en ce que la largeur de chaque ouverture (3, 4) est au plus égale au tiers de la longueur (a) du grand côté du rectangle.

8. Installation de régulation de la température d'un matériau (8) plan en défilement mettant en oeuvre le dispositif selon l'une des revendications 5 à 7 caractérisé en ce que le récepteur amplificateur (2) agit sur les moyens de chauffage (10) ou sur les moyens moteurs (12) en fonction de l'émissivité mesurée.

9. Installation de régulation de la température d'un matériau (8) plan en défilement caractérisé en ce qu'il comprend :

. deux guides d'onde (1, 1') selon l'une des revendications 5 à 7, l'un traversé par le matériau (8) en défilement , l'autre par un échantillon (8') du même matériau porté à la température souhaitée T.

. et un récepteur amplificateur (2) relié alternativement à l'un (1) et l'autre (1') guide grâce à une bascule (14) et agissant sur les moyens de chauffage (10) ou les moyens moteurs (12) en fonction de l'écart constaté entre les émissivités mesurées au niveau des deux guides (1,1').

FIG 1

FIG 2

0182680

FIG 3 a

FIG 3 b

FIG 3 c

FIG 4

## Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 586 970 (W. CONWAY) * Colonne 3, ligne 38 - colonne 6, ligne 5; figures 1-4 * | 1 | G 01 R 29/08 G 01 K 7/00 G 05 D 23/27 |
| | --- | | |
| A | BE-A- 659 613 (CENTRE NATIONAL DE RECHERCHES METALLURGIQUES) * Page 2, ligne 22 - page 4, ligne 20 * | 1 | |
| | ----- | | |
| | | | **DOMAINES TECHNIQUES RECHERCHES (Int. Cl.4)** |
| | | | G 01 R G 01 K G 05 D |

Le présent rapport de recherche a été établi pour toutes les revendications

| Lieu de la recherche | Date d'achèvement de la recherche | Examinateur |
|---|---|---|
| LA HAYE | 27-01-1986 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82